# EUROPÄISCHE PATENTANMELDUNG

(11) **EP 4 803 388 A1**
(43) Veröffentlichungstag der Anmeldung: **09.09.2026**
(21) Anmeldenummer: 25161852.6
(22) Anmeldetag: 05.03.2025
(51) Int. Cl.: B60T 13/74, B60T 8/171, B60T 8/172, F16D 121/24

(54) **VERFAHREN ZUR STEUERUNG EINER ELEKTROMECHANISCHEN BREMSE EINES FAHRZEUGS SOWIE VORRICHTUNG ZUM AUSFÜHREN DES VERFAHRENS**

(71) Anmelder: ZF CV Systems Global GmbH, 3006 Bern (CH)
(72) Erfinder: MÜLLER-DEILE, Felix, 30449 Hannover (DE); REINERS, Jan, 30163 Hannover (DE); MORITZ, Christoph, 30455 Hannover (DE)
(74) Vertreter: Ohlendorf, Henrike

(57) **Zusammenfassung**

Die Erfindung betrifft ein Verfahren (100) zur Steuerung einer elektromechanischen Bremse (12) eines Fahrzeugs (10). Das Verfahren umfasst ein Bestimmen einer Solldrehposition (34) für einen Motor (16) der elektromechanischen Bremse (12) mit einem Bremssteuergerät (30), ein Einstellen einer Drehposition (62) eines Motors (16) der elektromechanischen Bremse (12) mit einem Motorsteuergerät der elektromechanischen Bremse (12) auf die oder in Abhängigkeit von der Solldrehposition (34), ein Erfassen, dass die Solldrehposition (34) konstant ist und ein Verändern der Drehposition (62) in eine von der Solldrehposition (34) abweichende Position während die bestimmte Solldrehposition (34) konstant ist, nach dem Einstellen der Drehposition (62).

Die Erfindung betrifft ferner ein System mit einem Bremssteuergerät (30), eine elektromechanische Bremse (12) und ein Fahrzeug (10).

## Beschreibung

Die Erfindung betrifft den Bereich der Bremsvorrichtungen für Fahrzeuge, insbesondere Personenkraftwagen und Nutzfahrzeuge, wie Lastkraftwagen, Sattelschlepper oder landwirtschaftliche Zugmaschinen.

Aus dem Stand der Technik sind Bremsanlagen von Fahrzeugen, wie Nutzfahrzeugen oder Personenkraftwagen, hinlänglich bekannt. Bremsanlagen eines Fahrzeugs umfassen üblicherweise pro Rad des Fahrzeugs einen Bremskolben, der bei Betätigung, beispielsweise durch ein Bremspedal, einen oder mehrere mit einem Bremskolben verbundene Bremsbeläge an eine Bremsscheibe des jeweiligen Rads drückt, um eine Bremswirkung zu erzeugen.

Ein Bremskolben einer Bremsanlage wird in der Mehrzahl der Fahrzeuge bislang mit einem Fluid betrieben, wobei mit dem Fluid ein Druck in einer Druckkammer erhöht oder verringert wird, um so den Bremskolben gegen eine Feder in der Druckkammer in Abhängigkeit vom Druck zu bewegen. Insbesondere bei Nutzfahrzeugen werden Bremszylinder häufig durch Druckluft betrieben.

Zunehmend werden jedoch mit Fluid betriebene Bremsanlagen durch rein elektrische Bremsanlagen, die ohne ein Fluid auskommen, ersetzt.

Elektrische Bremsanlagen umfassen mehrere elektromechanisch aktuierte Bremsen, die jeweils einem Rad zugeordnet sind und einen Motor aufweisen. In Abhängigkeit von einer Drehposition des Motors wird ein Bremskolben, ähnlich wie bei fluidbetriebenen Bremsanlagen, bewegt, indem die Drehbewegung des Motors auf eine Längsbewegung des Kolbens übersetzt wird, um Bremsbeläge an die zugeordnete Bremsscheibe zu drücken und so eine Bremswirkung zu erzeugen.

Im Fall einer Betriebsbremse, die mit elektromechanischen Bremsen realisiert ist, wird somit eine von einer Bremspedalstellung abhängige Kraft mit dem Bremsbelag auf die Bremsscheibe ausgeübt, indem ein elektrischer Motor der jeweiligen elektromechanischen Bremse eine von der Bremspedalstellung abhängige Drehposition einnimmt. Der Motor hält die Position solange, bis ein Bremssteuergerät eine in Abhängigkeit von der Bremspedalstellung geänderte Bremskraft ermittelt oder die Bremspedalstellung variiert. Insbesondere bei einer Bergabfahrt mit konstanter Geschwindigkeit oder beim Halten an einer Ampel können so bestimmte Drehpositionen des Motors durch das Bremssteuergerät vorgegeben werden, die für einen längeren Zeitraum eingenommen werden, da eine für solche Situationen aufzuwendende Bremskraft über diesen Zeitraum konstant bleibt. Es kann dabei vorkommen, dass der Motor in seiner durch die vorgegebene Bremskraft vorgegebene Drehposition einen ungünstigen elektrischen Zustand einnimmt. Insbesondere, wenn der Motor ein dreiphasiger Motor ist, kann nämlich auch eine Drehposition angefordert werden, bei der beispielsweise ein besonders hoher Strom in einer der drei Phasen und ein vergleichsweise geringer Strom in den beiden anderen Phasen fließt, so dass eine unsymmetrische Belastung auftritt. Eine Beschädigung des Motors kann resultieren, wenn für einen längeren Zeitraum dieser besonders hohe Strom in einer der Phasen fließt. Neben dem Motor selbst kann auch die den Motor ansteuernde Leistungselektronik, nämlich etwa ein Wechselrichter, durch eine solche länger andauernde unsymmetrische Belastung beschädigt werden.

Um dem zu begegnen ist bekannt, die Wicklungen des Motors mit elektrischen Leitern auszubilden, die einen überdimensionierten Querschnitt aufweisen und entsprechend dazu eingerichtet sind, in bestimmten Situationen für einen längeren Zeitraum einen gegenüber dem üblichen Betrieb vergleichsweise hohen Strom zu führen. Auch die elektrischen Bauteile und Leitungen der Leistungselektronik können entsprechend überdimensioniert werden. Diese Überdimensionierung ist jedoch nicht wünschenswert, da die Kosten für eine elektromechanische Bremse dadurch insgesamt erhöht werden. Insbesondere benötigt ein solcher Motor auch einen größeren Bauraum, der teilweise nicht zur Verfügung steht oder nur schwer bereitstellbar ist.

Es ist daher Aufgabe der vorliegenden Erfindung den Problemen des Standes der Technik zu begegnen. Insbesondere soll eine Lösung für eine elektromechanischen Bremse eines Fahrzeugs gefunden werden, die eine Beschädigung eines Motors oder der Leistungselektronik der elektromechanischen Bremse bei konstanter Bremskraftanforderung vermeidet, ohne dass der Motor oder die Leistungselektronik überdimensioniert ausgebildet werden müssen. Jedenfalls soll eine Alternative zum aus dem Stand der Technik Bekannten gefunden werden.

Hierzu umfasst die Erfindung ein Verfahren zur Steuerung einer elektromechanischen Bremse eines Fahrzeugs gemäß Anspruch 1.

Demnach betrifft die Erfindung ein Verfahren zum Steuern einer elektromechanischen Bremse eines Fahrzeugs, das vorzugsweise zumindest teilweise mit einem Bremssteuergerät und/oder einem Motorsteuergerät der elektromechanischen Bremse ausgeführt wird.

Zunächst wird mit dem Bremssteuergerät eine Solldrehposition für einen Motor einer elektromechanischen Bremse bestimmt. Die Solldrehposition wird vorzugsweise in Abhängigkeit von einem Bremsanforderungssignal erzeugt, das beispielsweise von einem Eingabemittel, wie einem Pedal oder einem Hebel, empfangen wird. Ein Fahrer des Fahrzeugs kann demnach beispielsweise durch Betätigen eines Bremspedals einen Betriebsbremswunsch anzeigen, mit dem der Fahrer eine Verlangsamung oder Bremsung des Fahrzeugs wünscht. Das Bremsanforderungssignal, das den Bremswunsch anzeigt, wird dem Bremssteuergerät zugeführt und das Bremssteuergerät bestimmt dann in Abhängigkeit von weiteren Daten, wie beispielsweise einer aktuellen Geschwindigkeit und/oder einer Masse des Fahrzeugs, welche Bremskräfte mit den einzelnen Bremsaktuatoren an den einzelnen Rädern des Fahrzeugs zu erzeugen sind, um die Anforderungen des Fahrers bestmöglich zu erfüllen.

Es wird dann für wenigstens einen der Motoren der elektromechanischen Bremsen eine Solldrehposition bestimmt, bei der das Bremssteuergerät vorzugsweise die bestimmte Bremskraft erwartet. Die bestimmte Solldrehposition wird dann an ein Motorsteuergerät der elektromechanischen Bremse übertragen und mit dem Motorsteuergerät eine Drehposition des Motors eingestellt, die der Solldrehposition entspricht oder von der Solldrehposition abhängig ist.

Vorzugsweise wird demnach die Solldrehposition mit dem Bremssteuergerät bestimmt und die bestimmte Solldrehposition an ein Motorsteuergerät der elektromechanischen Bremse übertragen. Das Motorsteuergerät ist vorzugsweise eingerichtet, den elektrischen Motor anzusteuern. Das Motorsteuergerät ist vorzugsweise eine Umrichtersteuerung der elektromechanischen Bremse, der auch einfach als Umrichter bezeichnet werden kann, und erzeugt als Steuersignal mehrphasige Ströme, um Drehpositionen des Motors einzustellen. Das Motorsteuergerät erzeugt demnach vorzugsweise in Abhängigkeit von der Solldrehposition das Steuersignal, das auch als Solldrehpositionssignal bezeichnet werden kann, um den Motor anzusteuern. Dieses Steuersignal ist vorzugsweise ein mehrphasiges Signal, um die Phasen des Motors anzusteuern.

Nachdem die Drehposition des Motors eingestellt ist oder auch bereits beim Einstellen der Drehposition überwacht das Bremssteuergerät vorzugsweise kontinuierlich das Verhalten des Fahrzeugs und bestimmt die Solldrehposition neu, falls die vom Bremssteuergerät erwartete Bremskraft nicht mit dem realen Verhalten des Fahrzeugs übereinstimmt. Wird die Solldrehposition nicht verändert, weil beispielsweise das Verhalten des Fahrzeugs bei eingestellter Drehposition dem durch das Bremsanforderungssignal und dem durch das Bremssteuergerät erwartenden Verhalten entspricht, wird die Solldrehposition konstant gehalten und insbesondere dieses Konstanthalten vom Motorsteuergerät erfasst. Vorzugseise wird die Solldrehposition als konstant erfasst, sobald die Solldrehposition für mehr als einen vorgegebenen Zeitraum, also eine zeitliche Dauer, unverändert bleibt. Der Zeitraum ist vorzugsweise vordefiniert, etwa durch Versuche, und vorzugsweise im Motorsteuergerät hinterlegt. Der Zeitraum entspricht etwa einer Dauer im Bereich von zehn Sekunden bis zu einer Minute. Der Zeitraum kann jedoch auch einer Dauer von weniger als einer Sekunde entsprechen. Besonders bevorzugt wird die Solldrehposition aber nur als konstant erfasst, wenn sich die Solldrehposition von einer Ruheposition unterscheidet. Eine Ruheposition ist beispielsweise vordefiniert und entspricht einer Position, bei der keine Bremskraft erzeugt wird.

Gemäß der Erfindung wird dann im Fall, dass die bestimmte Solldrehposition konstant bleibt, also als konstant erkannt wird, die Drehposition des Motors verändert, nachdem eine Drehposition in Abhängigkeit von der Solldrehposition eingestellt wurde. Eine bestimmte Solldrehposition wird als konstant angesehen, wenn diese mindestens für einen vordefinierten Zeitraum, also länger als dieser Zeitraum, unverändert bleibt. Das heißt, eine bestimmte Solldrehposition ist konstant, solange das Bremssteuergerät keine neue Solldrehposition innerhalb des Zeitraums bestimmt, die von der zuvor bestimmten Solldrehposition abweicht. Während die Solldrehposition konstant ist, bezeichnet also vorzugsweise eine Dauer die beginnt, sobald die Solldrehposition als konstant erfasst wird, und endet, wenn eine neue Solldrehposition bestimmt wird.

Ferner bestimmt vorzugsweise das Motorsteuergerät, dass die Solldrehposition konstant ist. Sobald die Solldrehposition als konstante Solldrehposition bestimmt wird, verändert vorzugsweise das Motorsteuergerät die Drehposition des Motors in eine von der Solldrehposition abweichende Position. Das Steuersignal wird entsprechend vom Motorsteuergerät hierzu angepasst.

Der Erfindung liegt damit die Erkenntnis zugrunde, dass bei elektromechanischen Bremsen mit Mehrphasenmotoren, wie einem dreiphasigen Drehstrommotor, bei einem Motorstillstand je nach Position des Motors eine unsymmetrische Bestromung entstehen kann, die zu hohen Stromwärmeverlusten führt und dass solche Zustände unsymmetrischer Bestromung vermieden werden sollten. Außerdem liegt der Erfindung die Erkenntnis zugrunde, dass eine Linearbewegung zum Bewegen der Bremsbeläge, beispielsweise mit einem Kolben oder Stößel, der von dem Motor durch Drehbewegung des Motors bewegt wird, durch ein Übersetzungsverhältnis erfolgt, das sehr groß gewählt ist. Es sind demnach eine Vielzahl von Motorumdrehungen nötig, um eine vergleichsweise kurze Linearbewegung der Bremsbeläge zu ermöglichen. Die Linearbewegung der Bremsbeläge entspricht einer Bewegung zum Zuspannen oder Lösen der Bremse und kann auch als Stellweg bezeichnet werden. Durch das Übersetzungsverhältnis sind demnach für die Strecke von einem Zustand, an dem die Bremsbeläge maximal entfernt von einer Bremsscheibe liegen bis zu dem Zustand, in dem eine Bremswirkung eintritt, beispielsweise 30 bis 60 volle Umdrehungen des Motors nötig. Dieses Übersetzungsverhältnis dient dazu, um die Drehmomentanforderungen an den Motor gering zu halten. Es wurde somit erkannt, dass eine vom Motor vorgegebene Solldrehposition, um eine gewünschte Bremswirkung zu erhalten, mit einem großen Toleranzbereich eingenommen werden kann, der beispielsweise eine ganze Motordrehzahl umfasst. Innerhalb dieses Toleranzbereichs ergibt sich im Wesentlichen keine Veränderung der Bremskraft, da eine Motordrehung innerhalb des Toleranzbereichs in einer Linearbewegung resultiert, die vergleichsweise gering ist. Durch diesen großen Toleranzbereich kann der Motor demnach anstatt der Solldrehposition in eine dazu alternative Drehposition gebracht werden, in der die genannten ungünstigen hohen Ströme in einer einzelnen Phase nicht auftreten.

Insbesondere wird bei dem Verfahren die Solldrehposition kontinuierlich mit dem Bremssteuergerät bestimmt, beispielsweise mit einer Frequenz, mit der beispielsweise eine Pedalposition erfasst oder abgetastet wird, oder es wird die Solldrehposition ereignisabhängig bestimmt, wenn sich beispielsweise eine Pedalposition ändert. Die Solldrehposition kann zusätzlich auch, beispielsweise in Abhängigkeit von einer aktuellen Beschleunigung, einer Geschwindigkeit oder einer aktivierten ABS-funktion, bestimmt werden.

Die Solldrehposition wird beispielsweise in Grad angegeben. Demnach könnte eine Solldrehposition, bei der der Motor die Bremsbeläge am weitesten entfernt von einer Bremsscheibe hält, als Nullposition bezeichnet werden. Ist demnach beispielsweise vorgesehen, dass der Motor 50 Umdrehungen ausführen muss, bis ein Stößel oder Kolben seine gegenüber der Nullposition vollständig ausgefahrene Position aufweist, entspricht eine solche Position einer Drehposition von 18 000 Grad, nämlich dem Produkt aus 50 Umdrehungen und 360 Grad. Eine Solldrehposition, die vom Motor beispielsweise bei 720 Grad eingenommen werden soll, entspricht von der Nullstellung oder Nullgradposition zwei vollen Umdrehungen.

Ein Verändern der Drehposition von einer durch die Solldrehposition vorgegebenen Drehposition, wenn die Solldrehposition konstant vorgegeben wird, ist vorteilhaft, um einen ungünstigen Zustand des Motors zu vermeiden. Eine überdimensionierte Auslegung des Motors und der dazugehörigen Leistungselektronik, um dauerhaft die genannten hohen Ströme in ungünstigen Zuständen des Motors zu liefern, ist somit nicht nötig.

Gemäß einer ersten Ausführungsform umfasst das Verfahren ferner das Prüfen eines Kriteriums. In Abhängigkeit davon, ob das Kriterium erfüllt ist oder ob das Kriterium nicht erfüllt ist, wird der Schritt des Veränderns der Drehposition in eine von der Solldrehposition abweichende Position ausgeführt oder nicht. Insbesondere wenn das Kriterium erfüllt ist, wird die Drehposition während die Solldrehposition konstant ist, verändert. Ist das Kriterium nicht erfüllt, bleibt die Drehposition konstant, solange die Solldrehposition konstant ist. Vorzugsweise wird demnach zunächst erfasst, dass die Solldrehposition konstant ist und gleichzeitig oder erst danach geprüft, ob das Kriterium erfüllt ist.

So kann in Abhängigkeit von Sensorwerten des Motors, die etwa in der Motorsteuerung vorliegen, beispielsweise bestimmt werden, ob in der durch die vorgegebene Solldrehposition eingestellten Drehposition tatsächlich eine ungünstige Drehposition des Motors vorliegt. Beispielsweise kann eine Temperatur des Motors überwacht werden und als Kriterium festgelegt werden, dass die Temperatur oberhalb eines Schwellenwerts liegen muss, um das Kriterium zu erfüllen. Das heißt, ein stark aufgewärmter Motor aufgrund eines hohen Stroms kann so erkannt werden und nur in einem solchen Fall die Drehposition verändert werden. Indem die Drehposition in bestimmten Situationen nicht verändert wird, sondern auf der durch die Solldrehposition vorgegebenen Drehposition gehalten wird, kann sichergestellt werden, dass genau die gewünschte Bremskraft, die das Bremssteuergerät mit der Solldrehposition anfordert, gehalten wird. Trotz des oben genannten hohen Übersetzungsverhältnisses kann so sichergestellt werden, dass in Situationen, in denen kein Schutz des Motors nötig ist, nicht unnötigerweise eine Drehposition verändert wird.

Gemäß einer weiteren Ausführungsform umfasst das Verändern der Drehposition, während die Solldrehposition konstant ist, ein kontinuierliches Verändern der Drehposition.

Das heißt, die Drehposition wird, sobald diese von der Solldrehposition in eine andere Position verändert wird, kontinuierlich, also beispielsweise in kurzen Intervallen oder mit einer vorgegebenen Frequenz kontinuierlich weiter geändert. Das kontinuierliche Verändern der Drehposition erfolgt somit vorzugsweise solange die Solldrehposition als konstant erfasst wird.

Durch kontinuierliches Verändern der Drehposition des Motors ist es möglich, dass nicht genau bestimmt werden muss, ob eine Drehposition des Motors eine elektrisch eher geeignete oder ungeeignete Position ist. Vielmehr wird durch kontinuierliches Verändern der Drehposition ermöglicht, dass besonders ungünstige Positionen jedenfalls nur kurzzeitig eingenommen werden.

Gemäß einer weiteren Ausführungsform umfasst das Verändern der Drehposition, während die Solldrehposition konstant ist, das Verändern der Drehposition in einem Bereich. Der Bereich ist durch eine Minimaldrehposition und eine Maximaldrehposition begrenzt. Der Bereich umfasst demnach alle möglichen Drehpositionen zwischen einer Minimaldrehposition und einer Maximaldrehposition. Die Solldrehposition liegt in diesem Bereich. Vorzugsweise liegt die Solldrehposition mittig oder im Wesentlichen in der Mitte dieses Bereichs. Besonders bevorzugt umfasst dieser Bereich auch die Minimaldrehposition und die Maximaldrehposition. Es ist demnach eine minimale Drehposition und eine maximale Drehposition vorgegeben, die einen Bereich bilden, in dem die Solldrehposition selbst liegt. Die Minimaldrehposition und die Maximaldrehposition können beispielsweise jeweils als absoluter Wert oder als relativer Wert eines Winkels in Grad ausgehend von der Solldrehposition vorgegeben sein. Entspricht etwa die Solldrehposition einem Winkel von 5 000 Grad, so entspricht die Minimaldrehposition beispielsweise 4 910 Grad und die Maximaldrehposition 5 090 Grad. Der Bereich umfasst dann eine halbe Umdrehung des Motors.

Ein Verändern der Drehposition des Motors in einem Bereich begrenzt durch oder umfassend die Minimaldrehposition und die Maximaldrehposition ermöglicht so, dass keine zu große Veränderung oder willkürliche Änderung der Drehposition erfolgt und so keine Drehposition beim Verändern der Drehposition des Motors durch den Motor eingenommen wird, die zu einer ungewünschten Bremskraft führt, solange die Solldrehposition konstant ist.

Gemäß einer weiteren Ausführungsform erfolgt die Veränderung der Drehposition, während die Solldrehposition konstant ist, mit einem Winkelwert der Drehposition, der sich als Funktion über die Zeit in einer Wellenform zwischen der Minimaldrehposition und der Maximaldrehposition hin und her bewegt. Vorzugsweise entspricht die Solldrehposition einer mittleren maximalen Amplitude der Wellenform, die Maximaldrehposition der maximalen Amplitude und die minimale Amplitude der Minimaldrehposition der Wellenform. Die Wellenform entspricht also einem zeitlichen Verlauf zwischen einer minimalen und einer maximalen Amplitude. Die Wellenform ist vorzugsweise eine Sinusform. Die Wellenform weist zudem eine Frequenz auf, die unter 10 Hz, bevorzugt unter 5 Hz oder besonders bevorzugt unter 2 Hz, liegt. Vorzugsweise ist die Frequenz der Wellenform höher als 1 Hz.

Gemäß einer weiteren Ausführungsform entspricht die Minimaldrehposition einem Drehwinkelwert, der um einen Drehwinkelbetrag kleiner als ein Drehwinkelwert der Solldrehposition ist. Die Maximaldrehposition entspricht einem Drehwinkelwert, der um einen Drehwinkelwertbetrag größer als ein Drehwinkelwert der Solldrehposition ist. Das heißt, es ist ein Drehwinkelbetrag definiert und die Minimaldrehposition ist um den Drehwinkelwertbetrag kleiner als die Solldrehposition und die Maximaldrehposition ist um den Drehwinkelwertbetrag größer als die Solldrehposition. Der Drehwinkelwertbetrag entspricht vorzugsweise einer vollen Läuferumdrehung des Läufers des Motors, also 360 Grad, geteilt durch die Polpaarzahl. Gemäß einer Alternative beträgt der Drehwinkelwertbetrag der vollen Läuferumdrehung des Läufers des Motors geteilt durch die doppelte Polpaarzahl.

In dieser Ausführungsform wird berücksichtigt, dass im Fall einer nicht optimalen Position des Motors bereits ein Anteil einer vollen Läuferumdrehung genügt, um den Motor in eine geeignetere Position zu bewegen, wobei dieser Teil abhängig von der Polpaarzahl ist. Gemäß der Ausführungsform wird demnach vorgesehen, dass die Drehposition des Motors um eine ganze elektrische Umdrehung, im Fall einer vollen Läuferumdrehung geteilt durch die Polpaarzahl, vor und zurück gedreht wird oder um eine halbe elektrische Umdrehung, im Fall einer Läuferumdrehung geteilt durch die doppelte Polpaarzahl, vor und zurück gedreht wird.

Innerhalb dieser Grenzen, insbesondere noch, wenn sich zwischen der so definierten Minimaldrehposition und Maximaldrehposition die Drehposition wellenförmig oder sinusförmig bewegt, kann davon ausgegangen werden, dass ungünstige Positionen des Motors ausreichend selten angenommen werden, so dass eine spezielle Auslegung des Motors zum Halten einer Bremskraft während einer konstanten ungünstigen Solldrehposition nicht notwendig ist.

Gemäß einer weiteren Ausführungsform ist das Kriterium entweder erfüllt oder nicht erfüllt. Damit das Kriterium erfüllt ist, müssen ein oder mehrere Bedingungen eintreten, wobei das Eintreten einer erfüllten Bedingung, insbesondere beim oder zum Zeitpunkt des Prüfens des Kriteriums, bereits vergangen sein kann oder gerade erfolgt. Sind demnach ein oder mehrere der folgenden Bedingungen eingetreten, so ist das Kriterium erfüllt, ist keine der folgenden Bedingungen eingetreten, ist das Kriterium nicht erfüllt.

Gemäß einer ersten Bedingung ist eine aktuelle Geschwindigkeit des Fahrzeugs unterhalb eines vordefinierten Geschwindigkeitsschwellenwerts. Der Geschwindigkeitsschwellenwert beträgt vorzugsweise 5 km/h oder 1 km/h oder 0,25 km/h. Bevorzugt ist der Geschwindigkeitsschwellenwert kleiner als 5 km/h, kleiner als 1 km/h oder kleiner als 0,25 km/h. Eine weitere Bedingung, die, wenn sie zusätzlich oder alternativ erfüllt ist, das Kriterium erfüllt, ist, dass in mindestens einer Phase des Motors ein Strom fließt, dessen Betrag oberhalb eines Stromschwellenwerts liegt. Vorzugsweise liegt der Betrag für einen vordefinierten Zeitraum, mindestens also für eine vordefinierte Dauer, oberhalb des Stromschwellenwerts. Die vordefinierte Dauer entspricht beispielsweise der Zeitdauer ab der eine Solldrehposition als konstant erfasst wird. Eine weitere Bedingung umfasst, dass ein Drehmoment des Motors oberhalb eines Drehmomentschwellenwerts liegt. Auch das Drehmoment des Motors muss vorzugsweise mindestens für einen weitere oder den vordefinierten Zeitraum oberhalb des Drehmomentschwellenwerts liegen, damit die Bedingung eingetreten und das Kriterium erfüllt ist. Eine weitere Bedingung ist, dass ein oder mehrere Zustandsparameter einen vordefinierten Zustand der elektromechanischen Bremse angeben. Solche Zustände können beispielsweise anzeigen, ob eine Überhitzung der elektromechanischen Bremse eingetreten und/oder eine Retarderfunktion aktiviert ist. Demnach ist die Bedingung beispielsweise auch erfüllt, wenn der Zustandsparameter anzeigt, dass eine Retarderfunktion aktiviert ist. Ist die Retarderfunktion demgegenüber nicht aktiviert, ist die Bedingung nicht eingetreten und das Kriterium nicht erfüllt, es sei denn, eine andere Bedingung ist eingetreten. Auch wenn gemäß dieser Ausführungsform mehrere mögliche Bedingungen genannt sind, sind verschiedene Ausführungsformen der Erfindung umfasst, bei denen auch nur eine oder mehrere der genannten Bedingungen geprüft werden.

Gemäß einer beispielhaften Ausführungsform wird demnach nur die Bedingung geprüft, ob die aktuelle Geschwindigkeit des Fahrzeugs unterhalb eines vordefinierten Geschwindigkeitsschwellenwerts liegt und das Kriterium gilt nur als erfüllt, wenn diese Bedingung eingetreten ist. Anderenfalls ist das Kriterium nicht erfüllt, auch wenn theoretisch eine der anderen oben genannten Bedingungen erfüllt wäre.

Demnach umfasst das Verfahren, dass eine Solldrehposition als konstante Solldrehposition erkannt wird, beispielsweise indem die Solldrehposition für einen vordefinierten Zeitraum konstant geblieben ist. Vorzugsweise bleibt die Drehposition des Motors, solange die Solldrehposition noch nicht als konstant erkannt wurde, in einer Stellung, die der Solldrehposition entspricht. Sobald die Solldrehposition als konstante Solldrehposition erkannt wird, wird im nächsten Schritt überprüft, ob das Kriterium erfüllt ist. Hierzu werden die Bedingungen geprüft. Sind die Bedingungen wiederum von eigenen Zeiträumen oder Zeitdauern abhängig, so wird beispielsweise im Fall eines zu prüfenden Stroms durch eine Phase des Motors geprüft, ob dieser Strom bereits für einen vordefinierten Zeitraum oberhalb eines Stromschwellenwerts liegt. Ist dies nicht der Fall, wird die Drehposition des Motors weiter auf der Solldrehposition gehalten. Bleibt demgegenüber die Solldrehposition weiter konstant und läuft auch der Zeitraum zur Überwachung des Stroms ab, liegt also der Strom dann für den vordefinierten Zeitraum oberhalb des Stromschwellenwerts, wird das Verändern der Drehposition bei konstanter Solldrehposition aktiviert.

Demnach wird der Zustand der elektromechanischen Bremse geprüft und das Verändern der Drehposition nur dann ausgeführt, wenn dies wirklich nötig ist, um den Motor zu schützen. Insbesondere bei der Bedingung, die die aktuelle Geschwindigkeit des Fahrzeugs betrifft, wird zudem berücksichtigt, dass eine Veränderung der Drehposition nur dann ausgeführt wird, wenn das Fahrzeug ohnehin im Wesentlichen stillsteht und daher eine Beeinflussung der Bremskraft durch das Verändern der Drehposition keine erheblichen Auswirkungen auf das Verhalten des Fahrzeugs hat.

Gemäß einer weiteren Ausführungsform wird die Solldrehposition mit einem Bremssteuergerät kontinuierlich ermittelt und der Motor der elektromechanischen Bremse mit einem Steuersignal angesteuert. Das Steuersignal kann entweder direkt vom Bremssteuergerät erzeugt werden oder entspricht einem Signal, das von einem Motorsteuergerät der elektromechanischen Bremse in Abhängigkeit von der Solldrehposition erzeugt wird. Das Motorsteuergerät entspricht vorzugsweise einer Umrichtersteuerung.

Ferner umfasst das Bremssteuergerät oder vorzugsweise das Motorsteuergerät einen Normalmodus. Der Normalmodus wird eingenommen, solange die ermittelte Solldrehposition nicht als konstant erfasst wird. Sobald die ermittelte Solldrehposition als konstant erfasst und vorzugsweise das Kriterium erfüllt ist, schaltet das Motorsteuergerät oder das Bremssteuergerät von seinem Normalmodus in einen Schutzmodus.

Im Normalmodus entspricht das Steuersignal einem Solldrehpositionssignal mit dem die Drehposition auf die oder in Abhängigkeit von der Solldrehposition eingestellt wird. Im Schutzmodus wird, insbesondere vom Motorsteuergerät, das Solldrehpositionssignal von einem Überlagerungssignal überlagert. Das sich daraus überlagerte Signal aus Solldrehpositionssignal und Überlagerungssignal entspricht dann im Schutzmodus dem Steuersignal zum Ansteuern des Motors. In dem Schutzmodus erfolgt das Verändern der Drehposition in eine von der Solldrehposition abweichende Position durch das überlagerte Signal.

Das Überlagerungssignal entspricht dabei vorzugsweise einer kontinuierlichen Variation einer Wellenform. Das Überlagerungssignal entspricht demnach vorzugsweise Drehpositionen, die sich zeitlich so verändern, dass wenn auf einer X-Achse einer Zeitfunktion die Zeit aufgetragen und auf einer Y-Achse, die senkrecht zur X-Achse steht, die Drehzahl vorgegeben wird, der Signalverlauf einer kontinuierlichen Variation einer Wellenform entspricht. Insbesondere entspricht der Signalverlauf einer Sinusform, einer Dreiecksform oder einer Rechteckform. Das Überlagerungssignal weist vorzugsweise eine Frequenz auf, die geringer als 5 Hz oder geringer als 2,5 Hz oder geringer als 1 Hz ist. Vorzugsweise variiert das Überlagerungssignal oder das überlagerte Signal mit der Wellenform zwischen der Minimaldrehposition und der Maximaldrehposition. Die Wellenform weist demnach eine minimale und eine maximale Amplitude auf, wobei die minimale Amplitude der Minimaldrehposition und die maximale Amplitude der Maximaldrehposition entspricht. Auch umgekehrt kann die minimale Amplitude der Maximaldrehposition und die maximale Amplitude der Minimaldrehposition entsprechen.

Gemäß einer Ausführungsform ist das Motorsteuergerät als Umrichter ausgebildet, der im Normalmodus das Solldrehpositionssignal zum Ansteuern des Motors, also zum Halten einer Drehposition, ausgibt. Im Schutzmodus wird das Solldrehpositionssignal mit dem Überlagerungssignal, das im Umrichter erzeugt wird, überlagert, so dass das resultierende Steuersignal einem Verlauf des Überlagerungssignals folgt, das vorzugsweise um das Solldrehpositionssignal verschoben ist.

Durch Überlagern eines Solldrehpositionssignals, insbesondere, wenn dieses als analoges Signal ausgebildet ist, kann auf einfache Art und Weise eine Ansteuerung des elektrischen Motors mit Variation der Drehposition erfolgen.

Gemäß einer weiteren Ausführungsform wird im Fall, dass mehrere elektromechanische Bremsen des Fahrzeugs, insbesondere derselben Achse des Fahrzeugs, derart angesteuert werden, dass ihre Drehpositionen verändert werden, während die jeweilige Solldrehposition als konstant erfasst wird, an diese mehreren elektromechanischen Bremsen ein gleichförmiges Überlagerungssignal ausgegeben und vorzugsweise dem jeweiligen Solldrehpositionssignal überlagert. Die Überlagerungssignale an den unterschiedlichen elektrischen Motoren weisen demnach vorzugsweise eine gleiche Phase und/oder eine gleiche Amplitude auf.

Durch gleichförmige Überlagerungssignale wird ermöglicht, dass eine Bremskraft an allen Rädern eines Fahrzeugs, insbesondere an einer Achse, gleichförmig geändert wird. Es wird so ermöglicht, dass die resultierende Bremskraftveränderung sich möglichst nicht negativ auf ein Fahrverhalten auswirkt. Insbesondere kann so einem seitenweise ungleichmäßigen Bremsen, das beispielsweise zu einer Spurverschiebung führen könnte, entgegengewirkt werden.

Gemäß einer weiteren Ausführungsform wird im Fall, dass ein mit dem Bremssteuergerät erfasster Fehler an einer oder mehreren elektromechanischen Bremsen auftritt, das Überlagerungssignal in spezieller Weise erzeugt wird. Wenn demnach das Verändern der Drehposition in eine von der Solldrehposition abweichende Position, während die bestimmte Solldrehposition als konstant erfasst wird, für mehrere elektromechanische Bremsen, insbesondere derselben Achse eines Fahrzeugs, ausgeführt und gleichzeitig ein Fehler erkannt wird, werden Überlagerungssignale für die jeweiligen elektromechanischen Bremsen erzeugt, die ungleichförmig sind. Ungleichförmig bedeutet, dass die Überlagerungssignale insbesondere eine ungleiche Phase und/oder ungleiche Amplitude aufweisen.

Im Fall eines Fehlers kann so ein Fahrer durch ein spürbares ungleichmäßiges Bremsen auf den Fehler hingewiesen werden. Ein Fehler einer oder mehrerer elektromechanischen Bremsen kann so schneller vom Fahrer erkannt werden.

Ferner umfasst die Erfindung ein System mit einem Bremssteuergerät, das eingerichtet ist, das Verfahren nach einem der Ausführungsformen auszuführen.

Das System ist eingerichtet, das Verfahren nach einem der Ausführungsformen auszuführen. Insbesondere umfasst das System ein Bremssteuergerät, das eingerichtet ist, eine Solldrehposition für einen Motor einer elektromechanischen Bremse zu bestimmen und die bestimmte Solldrehposition an die elektromechanische Bremse, insbesondere ein Motorsteuergerät des Motors, zu senden. Der Motor ist eingerichtet, um eine Drehposition des Motors auf die Solldrehposition oder eine von der Solldrehposition abhängige Position einzustellen. Vorzugsweise wird der Motor dazu mit dem Motorsteuergerät mit einem Steuersignal angesteuert, das abhängig von der ermittelten Solldrehposition ist.

Außerdem ist das System eingerichtet, die Drehposition in eine von der Solldrehposition abweichende Position zu verändern, während die bestimmte Solldrehposition als konstant erkannt wird, vorzugsweise nachdem die Drehposition auf die Solldrehposition oder eine von der Solldrehposition abhängige Drehposition eingestellt wurde.

Gemäß einer Ausführungsform des Systems ist dieses eingerichtet, ein Steuersignal zum Ansteuern des Motors zu erzeugen. Das Steuersignal wird hierbei entweder direkt durch das Bremssteuergerät erzeugt oder das Steuersignal wird durch ein Motorsteuergerät in Abhängigkeit von der erfassten Solldrehposition erzeugt. Das Motorsteuergerät ist vorzugsweise eine Umrichtersteuerung der elektromechanischen Bremse für den elektrischen Motor des Systems. Im Fall, dass das Steuersignal vom Motorsteuergerät erzeugt wird, empfängt das Motorsteuergerät die Solldrehposition vom Bremssteuergerät. Ferner weist entweder das Bremssteuergerät, wenn dieses das Steuersignal erzeugt, einen Normalmodus und einen Schutzmodus auf. Erzeugt das Motorsteuergerät das Steuersignal, weist das Motorsteuergerät einen Normalmodus oder einen Schutzmodus auf. Im Normalmodus wird das Steuersignal auf die Solldrehposition mit dem Steuersignal eingestellt. Das Steuersignal wird im Normalmodus auch als Solldrehpositionssignal bezeichnet. In dem Schutzmodus wird das Solldrehpositionssignal mit einem Überlagerungssignal überlagert. Das so überlagerte Signal bildet nun das Steuersignal.

Das Überlagerungssignal ist vorzugsweise ein wellenförmiges Signal, das besonders bevorzugt, insbesondere, wenn mit dem Solldrehpositionssignal überlagert, zwischen einer minimalen Amplitude, die vorzugsweise einer Minimaldrehposition und einer maximalen Amplitude, die vorzugweise einer Maximaldrehposition entspricht, verläuft. Vorzugsweise weist das Überlagerungssignal eine Frequenz auf, die geringer als 5 Hz oder geringer als 2,5 Hz oder geringer als 1 Hz ist. Das Überlagerungssignal weist vorzugsweise eine Sinusform, eine Dreiecksform oder eine Rechteckform auf.

Gemäß einer Ausführungsform umfasst das System Eingabemittel, wie ein Pedal. Gemäß einer Alternative kann das Eingabemittel auch ein Handhebel oder ein virtueller Fahrer, nämlich eine autonome Steuerung des Fahrzeugs, sein. Das Eingabemittel ist eingerichtet, ein Bremsanforderungssignal in Abhängigkeit von einer erfassten Betätigung oder im Fall eines virtuellen Fahrers in Abhängigkeit von einer Vorgabe durch den virtuellen Fahrer zu erzeugen. Das Bremssteuergerät ist dann eingerichtet, in Abhängigkeit vom Bremsanforderungssignal eine Solldrehposition zu erzeugen.

Außerdem betrifft die Erfindung eine elektromechanische Bremse mit einem elektrischen Motor und einem Motorsteuergerät zum Ansteuern des Motors. Das Motorsteuergerät ist eingerichtet, eine Drehposition des Motors in Abhängigkeit von einer bestimmten Solldrehposition einzustellen. Vorzugsweise wird die Solldrehposition von einem Bremssteuergerät bestimmt und so für das Motorsteuergerät vorgegeben. Das Motorsteuergerät umfasst einen Normalmodus und einen Schutzmodus. In dem Normalmodus wird die Drehposition des Motors auf die Solldrehposition mit einem Steuersignal eingestellt, das einem Solldrehpositionssignal entspricht. Sobald die Solldrehposition eingestellt ist, wird das Solldrehpositionssignal konstant, um die Drehposition zu halten. Im Schutzmodus wird das Steuersignal, das dem Solldrehpositionssignal entspricht, von einem Überlagerungssignal überlagert, um so ein überlagertes Solldrehpositionssignal zu erzeugen. Das überlagerte Solldrehpositionssignal dient dann zum Verändern der Drehposition. Der Schutzmodus wird vorzugsweise dann vom Motorsteuergerät eingestellt, wenn die vorgegebene Solldrehposition konstant ist oder als konstant erfasst wird. Eine konstante Solldrehposition wird vorzugsweise von dem Motorsteuergerät erkannt, wenn die bestimmte Solldrehposition für einen vorgegebenen Zeitraum konstant ist, also keine neue bestimmte Solldrehposition vom Bremssteuergerät innerhalb des Zeitraums empfangen wird.

Gemäß einer weiteren Ausführungsform ist das Motorsteuergerät eingerichtet, um eine bestimmte Solldrehposition von einer konstanten bestimmten Solldrehposition zu unterscheiden. Gemäß einer weiteren Ausführungsform ist das Motorsteuergerät eingerichtet, um zu prüfen, ob ein Kriterium erfüllt ist oder nicht. Das Kriterium ist vorzugsweise dann erfüllt, wenn eine der oben genannten Bedingungen erfüllt ist. Das Motorsteuergerät ist ferner eingerichtet, nur in den Schutzmodus zu schalten, wenn auch das Kriterium erfüllt ist. Das heißt, selbst bei konstanter bestimmter Solldrehposition und nicht erfülltem Kriterium verbleibt das Motorsteuergerät im Normalmodus und wechselt nicht in den Schutzmodus.

Außerdem betrifft die Erfindung ein Fahrzeug. Das Fahrzeug ist eingerichtet, das Verfahren nach einer der vorgenannten Ausführungsformen auszuführen. Das Fahrzeug umfasst vorzugsweise ein System nach einer der genannten Ausführungsformen oder eine elektromechanische Bremse nach einer der genannten Ausführungsformen. Weitere Ausführungsformen ergeben sich anhand der in den Figuren näher erläuterten Ausführungsbeispiele. Hierbei zeigen:
- Fig. 1: ein System gemäß einem Ausführungsbeispiel,
- Fig. 2: ein Steuersignal gemäß einem Ausführungsbeispiel und
- Fig. 3: die Schritte des Verfahrens gemäß einem Ausführungsbeispiel.

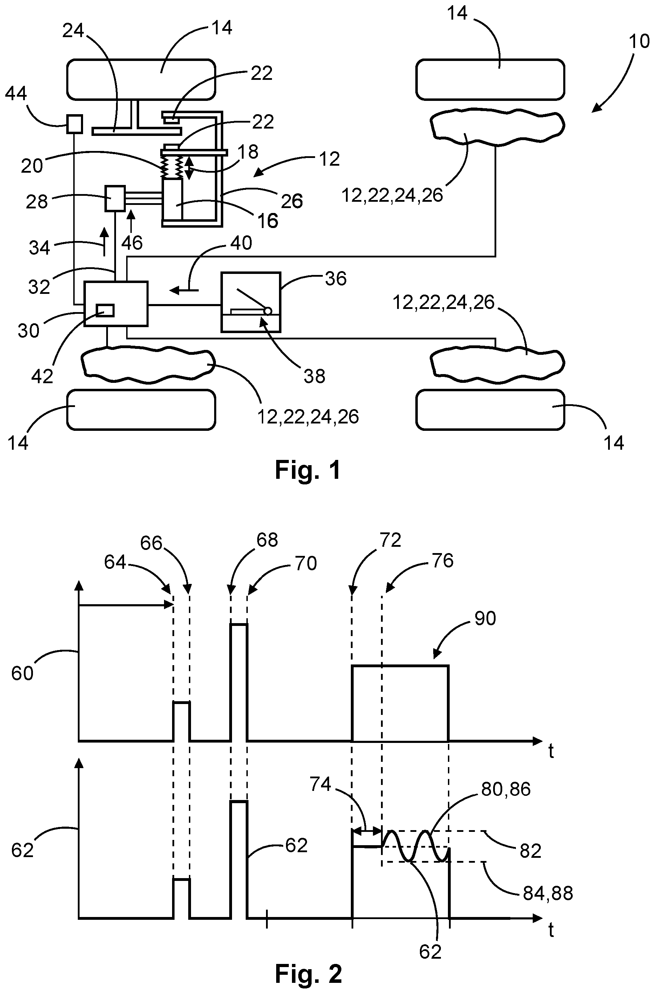

Fig. 1 zeigt ein Fahrzeug 10 gemäß einem Ausführungsbeispiel der Erfindung. Das Fahrzeug 10 umfasst eine elektromechanische Bremse 12, die exemplarisch nur für eines der vier dargestellten Räder 14 dargestellt ist, wobei jedes der Räder 14 eine elektromechanische Bremse 12 aufweist. Die detailliert dargestellte elektromechanische Bremse 12 umfasst einen elektrischen Motor 16, der im Inneren einen Läufer und einen Stator aufweist. Der Läufer ist vorzugsweise mit einem Innengewinde ausgebildet, um einen mit einem Außengewinde in einer Längsrichtung 18 verschiebbaren Kolben 20 in Abhängigkeit von seiner Drehposition zu bewegen. Gemäß einer besonders bevorzugten Ausgestaltung wird die Rotation des Motors mithilfe eines mechanischen Getriebes in eine Translation umgewandelt. Die Bewegung des Kolbens 20 wird auf Bremsbeläge 22 übertragen, um so gegen eine Bremsscheibe 24 gedrückt zu werden und eine Bremskraft zu erzeugen. Auch die Bremsscheibe 24, die Bremsbeläge 22 sowie ein Bremssattel 26 zum Führen der Bremsbeläge 22 sind an allen Rädern 14 bereitgestellt, aber nicht im Detail gezeigt.

Die elektromechanische Bremse 12 umfasst neben dem Motor 16 ein Motorsteuergerät 28, das mit einem Bremssteuergerät 30 über eine Datenleitung 32 verbunden ist, um Solldrehpositionen 34 über die Datenleitung 32 zu empfangen. Die Solldrehpositionen 34 werden vom Bremssteuergerät 30 an alle elektromechanischen Bremsen 12 individuell oder gleich übertragen. Erzeugt werden die Solldrehpositionen 34 in Abhängigkeit von einer Betätigung eines Eingabemittels 36, das hier einem Pedal 38 entspricht. Das Pedal 38 ist ein Bremspedal. In Abhängigkeit von einer Stellung des Bremspedals wird ein Bremsanforderungssignal 40 an das Bremssteuergerät 30 übertragen. Das Bremssteuergerät 30 umfasst ferner einen Beschleunigungssensor 42 und ist mit Raddrehzahlsensoren 44 mindestens eines der Räder 14 verbunden, um eine aktuelle Geschwindigkeit des Fahrzeugs 10 zu bestimmen. In Abhängigkeit von dem Bremsanforderungssignal 40 sowie einer bestimmten Geschwindigkeit und/oder Beschleunigung, wird die Solldrehposition 34 an das Motorsteuergerät 28 übertragen. In Abhängigkeit von der Solldrehposition 34, die vom Bremssteuergerät 30 bestimmt wurde, wird dann mit dem Motorsteuergerät 28 ein Steuersignal 46 erzeugt, um den Motor 16 anzusteuern.

Fig. 2 zeigt zwei zeitliche Verläufe, wobei im oberen Teil der Fig. 2 der zeitliche Verlauf der Solldrehposition 34 über der senkrechten Achse 60 aufgetragen ist und die waagerechte Achse der Zeitachse entspricht. Im unteren Teil der Fig. 2 verläuft in waagerechter Richtung ebenfalls die Zeitachse mit gleicher Zeiteinteilung, wie auf der oberen Zeitachse, wobei auf der senkrechten Achse 60 eine Drehposition 62 des Motors 16 aufgetragen ist, die in Abhängigkeit vom Steuersignal 46 eingestellt ist.

Im zeitlichen Verlauf, der im Schnittpunkt der Achsen beginnt, wird bis zum Zeitpunkt 64 eine Solldrehposition 34 vorgegeben, die einer Ruheposition der elektromechanischen Bremse 12 entspricht. Diese Ruheposition kann eine Nullstellung oder Nulldrehposition des Motors darstellen, bedeutet aber nicht einschränkend, dass in diesem Fall der Kolben 20 vollständig in den Motor 16 ein- oder ausgefahren ist. Vielmehr ist diese Ruhestellung als eine Position zu bezeichnen, in der keine Bremskraft durch die elektromechanische Bremse 12 erzeugt wird. Die Ruheposition entspricht beispielsweise einer Solldrehposition 34, die ausreichendes Lüftspiel unter Beachtung der aktuellen Abnutzung von Bremsbelägen 22 und Bremsscheibe 24 einnimmt. Vorzugsweise ist diese Ruheposition demnach auch abhängig vom Verschleiß der elektromechanischen Bremse 12.

Nach dem Zeitpunkt 64 wird die Solldrehposition 34 erhöht und ab dem Zeitpunkt 66 wieder in die Ruheposition überführt. Zum Zeitpunkt 64 wird demnach die neue Solldrehposition 34 an die elektromechanische Bremse 12 übertragen und die Drehposition 62 ändert sich auf die Solldrehposition 34. Zum Zeitpunkt 66 wird wiederum die neue Solldrehposition 34, die einer Ruheposition entspricht, durch den Motor 16 als Drehposition 62 eingestellt. Zwischen den Zeitpunkten 64 und 66 erfolgt somit eine Bremsung.

Im Zeitpunkt 68 wird dann wieder eine neue Solldrehposition 34 vorgegeben und entsprechend die Drehposition 62 des Motors auf die neue Solldrehposition 34 eingestellt. Im Zeitpunkt 70 wird wieder eine Solldrehposition 34 bestimmt, die der Ruheposition entspricht und entsprechend wird auch die Drehposition 62 des Motors umgestellt. Eine zweite stärkere Bremsung wird ausgeführt.

Im Zeitpunkt 72 wird dann wieder eine neue Solldrehposition 34 vorgegeben, um eine dritte Bremsung auszuführen. Die Solldrehposition 34 wird auch als Drehposition 62 mit dem Motor 16 eingestellt. Nach Ablauf eines vordefinierten Zeitraums 74 erkennt das Motorsteuergerät 28 der elektromechanischen Bremse 12, dass sich die Solldrehposition 34 in diesem Zeitraum 74 nicht geändert hat, erfasst oder betrachtet diese nun als konstant und schaltet von einem Normalmodus in einen Schutzmodus. Ein Solldrehpositionssignal wird ab dem Zeitpunkt 76 von einem Überlagerungssignal überlagert, so dass das resultierende Steuersignal einem überlagerten Signal 80 entspricht, das sich sinusförmig zwischen einer maximalen Amplitude 82 und einer minimalen Amplitude 84 bewegt. Entsprechend zu diesem Steuersignal 80 ändert sich auch die Drehposition 62 zwischen einer Maximaldrehposition 86 und einer Minimaldrehposition 88. Zum Zeitpunkt 90 wird eine neue Solldrehposition 34 bestimmt, die wieder der Ruheposition entspricht, so dass auch die Drehposition 62 wieder an die Solldrehposition 34 angepasst wird. Die Solldrehposition wird nicht mehr als konstant erfasst und zurück in den Normalmodus geschaltet.

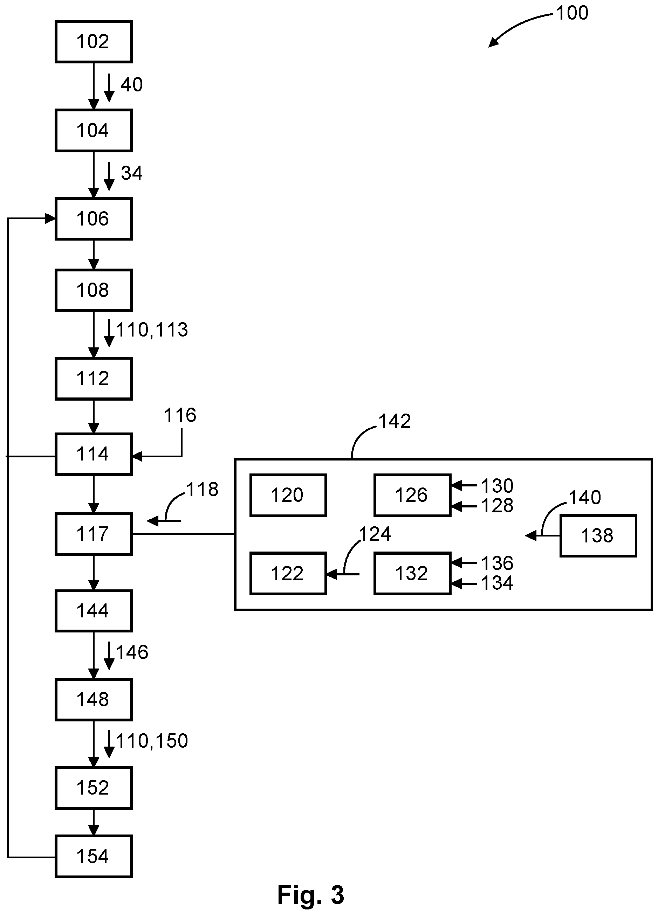

Fig. 3 zeigt die Schritte des Verfahrens 100 gemäß einem Ausführungsbeispiel. In einem Schritt 102 wird ein Bremsanforderungssignal 40 von einem Eingabemittel 36 an ein Bremssteuergerät 30 übertragen. Im Schritt 104 wird in Abhängigkeit vom Bremsanforderungssignal 40 eine Solldrehposition 34 ermittelt und an ein Motorsteuergerät 28 in einem Schritt 106 übergeben. In einem Schritt 108 wird ein Steuersignal 110 erzeugt und ein Motor 16 einer elektromechanischen Bremse 12 in einem Schritt 112 mit dem Steuersignal 110, das einem Solldrehpositionssignal 113 entspricht, angesteuert. Im Schritt 114 wird vom Motorsteuergerät 28 geprüft, ob bereits eine neue bestimmte Solldrehposition 34 vorliegt und im Fall, dass sich die bestimmte Solldrehposition 34 geändert hat, wird wieder Schritt 106 ausgeführt. Solange die Solldrehposition 34 sich nicht ändert, wird gleichzeitig ein Zeitraum 116 überwacht. Läuft dieser Zeitraum 116 ab und ist die bestimmte Solldrehposition 34 weiter nicht verändert, wird in einem Schritt 117 geprüft, ob ein Kriterium 118 erfüllt ist. Das Kriterium 118 ist erfüllt, wenn die Solldrehposition 34 von einer Ruheposition 120, die beispielsweise vordefiniert ist, abweicht. Das Kriterium 118 ist ebenfalls erfüllt, wenn eine aktuelle Geschwindigkeit 122 oberhalb eines Geschwindigkeitsschwellenwerts 124 liegt, wenn ein Strom 126 durch mindestens eine Phase des Motors fließt, der oberhalb eines Stromschwellenwerts 128 liegt und zwar für mindestens einen vordefinierten Zeitraum 130, der sich vom Zeitraum 116 unterscheidet oder diesem entspricht oder wenn ein Drehmoment 132 für einen weiteren Zeitraum 134 oberhalb eines Drehmomentschwellenwerts 136 liegt und/oder ein Zustandsparameter 138 einen vordefinierten Zustand 140 anzeigt. Die Bedingungen 142 werden beispielsweise anhand von Sensorwerten und in einem Speicher hinterlegten Schwellenwerten bestimmt.

Ist eines oder sind mehrere der Kriterien erfüllt, so wird in einem Schritt 144 ein Überlagerungssignal 146 erzeugt. In einem Schritt 148 wird dem Solldrehpositionssignal 113 das Überlagerungssignal 146 überlagert, um ein Steuersignal 110 auszugeben, das einem überlagerten Solldrehpositionssignal oder überlagerten Signal 150 entspricht. Entsprechend wird im Schritt 152 der Motor 16 mit dem überlagerten Solldrehpositionssignal 150 angesteuert. Im Schritt 154 wird die Drehposition 62 des Motors variiert in Abhängigkeit von dem überlagerten Solldrehpositionssignals 150. Dies erfolgt solange, bis eine neue Solldrehposition 34 ermittelt wird. Danach wird wieder Schritt 106 ausgeführt.

### Bezugszeichen (Teil der Beschreibung)

- 10: Fahrzeug
- 12: elektromechanische Bremse
- 14: Räder
- 16: elektrischer Motor
- 18: Längsrichtung
- 20: Kolben
- 22: Bremsbeläge
- 24: Bremsscheibe
- 26: Bremssattel
- 28: Motorsteuergerät
- 30: Bremssteuergerät
- 32: Datenleitung
- 34: Solldrehpositionen
- 36: Eingabemittel
- 38: Pedal
- 40: Bremsanforderungssignal
- 42: Beschleunigungssensor
- 44: Raddrehzahlsensoren
- 46: Steuersignal
- 60: senkrechte Achse
- 62: Drehposition
- 64: Zeitpunkt
- 66: Zeitpunkt
- 68: Zeitpunkt
- 70: Zeitpunkt
- 72: Zeitpunkt
- 74: vordefinierter Zeitraum
- 76: Zeitpunkt
- 80: überlagertes Signal
- 82: maximale Amplitude
- 84: minimale Amplitude
- 86: Maximaldrehposition
- 88: Minimaldrehposition
- 90: Zeitpunkt
- 100: Verfahren
- 102: Übertragen Bremsanforderungssignal
- 104: Ermitteln Solldrehposition
- 106: Übergeben Solldrehposition
- 108: Erzeugen Steuersignal
- 110: Steuersignal
- 112: Ansteuern Motor
- 113: Solldrehpositionssignal
- 114: Prüfen Solldrehposition
- 116: Zeitraum
- 117: Prüfen Kriterium
- 118: Kriterium
- 120: Ruheposition
- 122: aktuelle Geschwindigkeit
- 124: Geschwindigkeitsschwellenwert
- 126: Strom
- 128: Stromschwellenwert
- 130: vordefinierter Zeitraum
- 132: Drehmoment
- 134: weiterer Zeitraum
- 136: Drehmomentschwellenwert
- 138: Zustandsparameter
- 140: vordefinierter Zustand
- 142: Bedingungen
- 144: Erzeugen Überlagerungssignal
- 146: Überlagerungssignal
- 148: Überlagern Solldrehpositionssignal
- 150: überlagertes Solldrehpositionssignal
- 152: Ansteuern Motor
- 154: Variieren Drehposition des Motors

## Patentansprüche

1. Verfahren (100) zur Steuerung einer elektromechanischen Bremse (12) eines Fahrzeugs (10), umfassend die Schritte:
- Bestimmen einer Solldrehposition (34) für einen Motor (16) der elektromechanischen Bremse (12) mit einem Bremssteuergerät (30),
- Einstellen einer Drehposition (62) eines Motors (16) der elektromechanischen Bremse (12) mit einem Motorsteuergerät der elektromechanischen Bremse (12) auf die oder in Abhängigkeit von der Solldrehposition (34),
- Erfassen, dass die Solldrehposition (34) konstant ist und
- Verändern der Drehposition (62) in eine von der Solldrehposition (34) abweichende Position während die bestimmte Solldrehposition (34) konstant ist, nach dem Einstellen der Drehposition (62).

2. Verfahren (100) nach Anspruch 1, wobei das Verfahren (100) ferner das Prüfen eines Kriteriums (118) umfasst, wobei
das Verändern der Drehposition (62), während die Solldrehposition (34) konstant ist, nur dann ausgeführt wird, wenn das Kriterium (118) bei der Prüfung erfüllt ist, und anderenfalls die Drehposition (62) konstant auf der Solldrehposition (34) gehalten wird, während die bestimmte Solldrehposition (34) konstant ist.

3. Verfahren (100) nach Anspruch 1 oder 2, wobei das Verändern der Drehposition (62), während die Solldrehposition (34) konstant ist, kontinuierlich erfolgt.

4. Verfahren (100) nach einem der vorhergehenden Ansprüche, wobei das Verändern der Drehposition (62), während die Solldrehposition (34) konstant ist, das Verändern der Drehposition (62) in einem Bereich umfasst, wobei der Bereich zwischen einer Minimaldrehposition (88) und einer Maximaldrehposition (86) liegt und die Solldrehposition (34), insbesondere als Mitte des Bereichs, umfasst, wobei der Bereich vorzugsweise auch die Minimaldrehposition (88) und die Maximaldrehposition (86) umfasst.

5. Verfahren (100) nach Anspruch 4, wobei die Minimaldrehposition (88) einem Drehwinkelwert entspricht, der um einen Drehwinkelwertbetrag kleiner als ein Drehwinkelwert der Solldrehposition (34), und die Maximaldrehposition (86) einem Drehwinkelwert entspricht, der um einen Drehwinkelwertbetrag größer als ein Drehwinkelwert der Solldrehposition (34), ist, wobei der Drehwinkelwertbetrag einer vollen Läuferumdrehung des Läufers des Motors (16) geteilt durch die Polpaarzahl oder geteilt durch die doppelte Polpaarzahl entspricht.

6. Verfahren (100) nach einem der Ansprüche 2 bis 5 wobei das Kriterium (118), vorzugsweise nur dann erfüllt ist, wenn mindestens eine oder mehrere der folgenden Bedingungen (142) eintreten oder beim Prüfen des Kriteriums (118) eingetreten sind:
- eine aktuelle Geschwindigkeit (122) des Fahrzeugs (10) liegt unterhalb eines vordefinierten Geschwindigkeitsschwellenwerts (124), wobei der Geschwindigkeitsschwellenwert (124) vorzugsweise kleiner als 5 km/h oder kleiner als 1 km/h oder kleiner als 0,25 km/h ist,
- ein durch mindestens eine Phase des Motors (16) fließender Strom (126) liegt oberhalb eines Stromschwellenwerts (128), insbesondere mindestens für einen vordefinierten Zeitraum (130),
- ein Drehmoment (132) des Motors (16) liegt oberhalb eines Drehmomentschwellenwerts (136), insbesondere mindestens für den oder einen weiteren vordefinierten Zeitraum (130, 134),
- ein oder mehrere Zustandsparameter (138) geben einen vordefinierten Zustand (140) der elektromechanischen Bremse (12) an.

7. Verfahren (100) nach einem der vorhergehenden Ansprüche, wobei die Solldrehposition (34) mit einem Bremssteuergerät (30) ermittelt wird und der Motor (16) der elektromechanischen Bremse (12) mit einem in Abhängigkeit von der ermittelten Solldrehposition (34), insbesondere mit einem Motorsteuergerät erzeugten, Steuersignal (110) angesteuert wird, wobei
das Steuersignal (110) in einem Normalmodus, in dem die Solldrehposition als nichtkonstant erfasst wird, ein Solldrehpositionssignal als Steuersignal (110) ausgibt, mit dem die Drehposition (62) des Motors (16) mit dem Motorsteuergerät der elektromechanischen Bremse (12) auf die oder in Abhängigkeit von der Solldrehposition (34) eingestellt oder gehalten wird, und wobei
während die ermittelte Solldrehposition (34) als konstant erfasst wird und vorzugsweise das Kriterium (118) erfüllt wird oder ist, das Bremssteuergerät (30) oder ein Motorsteuergerät (28), insbesondere eine Umrichtersteuerung der elektromechanischen Bremse (12) für den elektrischen Motor (16), vom Normalmodus in einen Schutzmoduls umschaltet, in dem das Solldrehpositionssignal mit einem Überlagerungssignal (146) überlagert wird, um das Steuersignal (110) zu bilden, wobei
das Überlagerungssignal (146) vorzugsweise eine kontinuierliche Variation einer Wellenform, insbesondere einer Sinusform, einer Dreiecksform oder Rechteckform entspricht, wobei
das Überlagerungssignal (146) vorzugsweise eine Frequenz aufweist, die gleich oder geringer als 5 Hz oder 10 Hz ist und wobei
vorzugsweise die Wellenform zwischen einer minimalen Amplitude (84) und einer maximalen Amplitude (82) verläuft, und die minimale Amplitude (84) die Minimaldrehposition (88) und die maximale Amplitude (82) die Maximaldrehposition (86) anzeigt.

8. Verfahren (100) nach einem der vorhergehenden Ansprüche, wobei im Fall, dass das Verändern der Drehposition (62) in eine von der Solldrehposition (34) abweichende Position, während die bestimmte Solldrehposition (34) als konstant erfasst wird, für mehrere elektromechanische Bremsen (12), insbesondere derselben Achse eines Fahrzeugs (10), ausgeführt wird, die jeweils vom Motorsteuergerät (28) oder Bremssteuergerät (30) erzeugten Überlagerungssignale (146) gleichförmig sind und insbesondere eine gleiche Phase und/oder gleiche Amplitude aufweisen.

9. Verfahren (100) nach einem der vorhergehenden Ansprüche, wobei im Fall, dass, insbesondere mit einem Bremssteuergerät (30), ein Fehler einer oder mehrerer elektromechanischer Bremsenerfasst wird, und das Verändern der Drehposition (62) in eine von der Solldrehposition (34) abweichende Position, während die bestimmte Solldrehposition (34) als konstant erfasst wird, für mehrere elektromechanischen Bremse (12), insbesondere derselben Achse eines Fahrzeugs (10), ausgeführt wird, die jeweils vom Motorsteuergerät (28) oder Bremssteuergerät (30) erzeugten Überlagerungssignale (146) ungleichförmig sind und insbesondere eine ungleiche Phase und/oder ungleiche Amplitude aufweisen.

10. System mit einem Bremssteuergerät (30) und/oder einem Motorsteuergerät (28), das eingerichtet ist das Verfahren (100) nach einem der Ansprüche 1 bis 9 auszuführen, insbesondere zum:
- Bestimmen einer Solldrehposition (34) für die elektromechanische Bremse (12) mit dem Bremssteuergerät (30) und/oder
- Einstellen einer Drehposition (62) eines Motors (16) der elektromechanischen Bremse (12) auf die oder in Abhängigkeit von der Solldrehposition (34) und/oder
- Verändern der Drehposition (62) in eine von der Solldrehposition (34) abweichende Position, während die bestimmte Solldrehposition (34) konstant ist, nach dem Einstellen der Drehposition (62).

11. System nach Anspruch 10, wobei das Bremssteuergerät (30) oder ein Motorsteuergerät (28), insbesondere eine Umrichtersteuerung der elektromechanischen Bremse (12) für den elektrischen Motor (16) des Systems, eingerichtet ist, ein Steuersignal (110) zu erzeugen, das in einem Normalmodus die aktuelle ermittelte Solldrehposition (34) mit einem Solldrehpositionssignal einstellt, wobei das Bremssteuergerät (30) oder die Motorsteuerung eingerichtet ist, das Solldrehpositionssignal in einem Schutzmodus mit einem Überlagerungssignal (146) zu überlagern und das überlagerte Signal als Steuersignal (110) auszugeben.

12. System nach einem der Ansprüche 10 oder 11, ferner umfassend ein Eingabemittel (36), wie ein Pedal (38), wobei das Eingabemittel (36) eingerichtet ist, ein Bremsanforderungssignal (40) in Abhängigkeit von einer erfassten Betätigung zu erzeugen und das Bremssteuergerät (30) eingerichtet ist, eine Solldrehposition (34) in Abhängigkeit vom Bremsanforderungssignal (40) zu erzeugen.

13. Elektromechanische Bremse (12), umfassend einen elektrischen Motor (16) und ein Motorsteuergerät (28) zum Ansteuern des Motors (16), wobei das Motorsteuergerät (28) eingerichtet ist, eine Drehposition (62) des Motors (16) in Abhängigkeit von einer bestimmten Solldrehposition (34) einzustellen, wobei das Motorsteuergerät (28) einen Normalmodus, in dem die Drehposition (62) des Motors (16) auf die Solldrehposition (34) mit einem Steuersignal (110), das einem Solldrehpositionssignal (113) entspricht, eingestellt wird, und einem Schutzmodus aufweist, in dem das Solldrehpositionssignal (113) von einem Überlagerungssignal (146) überlagert wird, um die Drehposition (62) zu verändern, wobei die elektromechanische Bremse (12) eingerichtet ist, in den Schutzmodus umzuschalten, wenn die bestimmte Solldrehposition (34) als konstant erfasst wird.

14. Elektromechanische Bremse (12) nach Anspruch 13, wobei das Motorsteuergerät (28) eingerichtet ist, eine bestimmte Solldrehposition von einer konstanten bestimmten Solldrehposition zu unterscheiden oder um zu prüfen, ob ein Kriterium (118) erfüllt ist oder nicht.

15. Fahrzeug (10), das eingerichtet ist das Verfahren (100) nach einem der Ansprüche 1 bis 9 auszuführen, insbesondere umfassend ein System nach einem der Ansprüche 11 oder 12 oder eine elektromechanische Bremse (12) nach Anspruch 13 oder 14.
